# NEUE EUROPÄISCHE PATENTSCHRIFT

(11) **EP 1 903 264 B2**
(45) Veröffentlichungstag und Bekanntmachung des Hinweises auf die Entscheidung über den Einspruch: **24.07.2013**
(45) Hinweis auf die Patenterteilung: 09.09.2009
(21) Anmeldenummer: 07017829.8
(22) Anmeldetag: 12.09.2007
(51) Int. Cl.: F16K 1/44

(54) **Doppelsitz-Ventilvorrichtung**
Double-seat valve device
Dispositif de soupape à deux sièges

(30) Priorität: 25.09.2006 DE 102006046442
(43) Veröffentlichungstag der Anmeldung: 26.03.2008
(73) Patentinhaber: Gebr. Rieger GmbH & Co. KG, 73431 Aalen (DE)
(72) Erfinder: Du, Tai Luong, Ing.-Ing., 73431 Aalen (DE)
(74) Vertreter: Patentanwälte Ruff, Wilhelm, Beier, Dauster & Partner

(56) Entgegenhaltungen:
- EP-A- 0 098 418
- EP-A- 0 819 876
- EP-A- 0 952 376
- EP-A1- 0 044 517
- EP-A1- 0 208 126
- EP-B1- 0 587 690
- DE-A1- 3 005 329
- DE-A1- 4 236 464
- DE-A1- 19 603 070
- DE-B2- 2 643 273

## Beschreibung

Die Erfindung betrifft eine Doppelsitz-Ventilvorrichtung, insbesondere für die Pharma-, Lebensmittel- und Getränkeindustrie, mit einem Gehäuse, das einen ersten und einen zweiten Kanalbereich für je ein Medium sowie einen zwischen den Kanalbereichen angeordneten, zu den Kanalbereichen offenen Leckage-raum mit einem ersten Ventilsitz und einem zweiten Ventilsitz aufweist, mit einem ersten Ventilteller, der mit dem ersten Ventilsitz zusammenarbeitet, so dass der Leckageraum zu dem ersten Kanalbereich verschließbar ist, mit einem zweiten Ventilteller, der mit dem zweiten Ventilsitz zusammenarbeitet, so dass der Leckageraum zu dem zweiten Kanalbereich verschließbar ist, und mit einem zumindest teilweise in dem zweiten Kanalbereich angeordneten rohrförmigen Element, wobei der zweite Ventilteller an einem ersten Ende des rohrförmigen Elements angeordnet ist und das rohrförmige Element an einem zweiten Ende beweglich in dem Gehäuse gelagert ist.

Ein derartiges Doppelsitzventil ist beispielsweise aus dem Produktkatalog "Neumo/Rieger", Doppelsitzventile, Ausgabe 08/2003 bekannt. Durch das rohrförmige Element hindurch kann ein Reinigungsmittel für eine Reinigung im Einsatz der Ventilvorrichtung (cleaning in process - CIP) oder eine Sterilisation im Einsatz (sterilization in process -SIP) des ersten oder des zweiten Kanalbereichs und des Leckageraums hindurchgeführt werden. Das in dem Gehäuse verschiebbar gelagerte rohrförmige Element kommt jedoch aufgrund seiner Bewegung zumindest teilweise in Kontakt mit der Umgebung, z.B der Außenluft. Bei Einsatz in einer nicht sterilen Umgebung besteht bei derartigen Doppelsitz-Ventilvorrichtungen die Gefahr der Einschleppung von Verunreinigungen, weshalb sie nicht als Aseptik-Ventile eingesetzt werden.

Eine aseptische Doppelsitz-Ventilvorrichtung ist beispielsweise aus der DE 42 43 111 A1 bekannt. Ein zwischen den Kanalbereichen angeordneter Leckageraum ist dabei über ein Ablaufrohr mit der Umgebung verbunden, welches nicht durch den zweiten Kanalbereich verläuft. Die Anordnung erlaubt keine Reinigung/Sterilisation im Einsatz der Ventilvorrichtung. Ein Reinigen ist nur durch Anlüften eines Ventils möglich, d. h. durch Öffnen eines Ventils mit einem geringen Weg bei gleichzeitigem Geschlossenhalten des zweiten Ventils. Die aus DE 42 43 111 A1 bekannte Doppelsitz-Ventilvorrichtung weist weiter konisch zulaufende Ventilsitze mit Kanten, welche sich durch herkömmliche Mittel üblicherweise nur schlecht reinigen lassen, auf.

Doppelsitz-Ventilvorrichtungen sind weiter beispielsweise aus EP 0 098418 A1, EP 0 819 876 A2, DE 42 36 464 A1 und EP 0 952 376 A1 bekannt.

Aus der EP 0 208 126 A1 ist eine leckagefrei schaltende und sitzreinigungsfähige Doppelsitz-Ventilvorrichtung umfassend zwei voneinander unabhängige, relativ zueinander bewegbare Schließglieder bekannt, die mittels einer Betätigungseinrichtung aus der Schließ- in eine Offenstellung bewegbar sind, wobei die Ventilstangen beider Schließglieder in eine Richtung weisen, teleskopartig ineinanderfassen, und in eine Betätigungseinrichtung hineingeführt sind.

Aus der DE 196 03 070 A1 ist ein Prozessventil entsprechend den Merkmalen des Oberbegriffes des unabhängigen Anspruchs 1 bekannt, mit einem einen ersten Ventilsitz aufweisenden ersten Ventilgehäuse und mit einem einen zweiten Ventilsitz aufweisenden zweiten Ventilgehäuse, sowie mit einem dem ersten Ventilsitze zugeordneten ersten Ventilteller und mit einem dem zweiten Ventilsitz zugeordneten zweiten Ventilteller, wobei die beiden Ventilteller auf einer gemeinsamen Achse über Betätigungselemente derart verschiebbar sind, dass die beiden Ventilgehäuse wahlweise verbunden oder getrennt werden können und wobei ferner zwischen den Ventiltellern ein Leckageraum gebildet wird und das erste Ventilgehäuse, das zweite Ventilgehäuse und der Leckageraum gegenüber den Betätigungselementen mit je einem Faltenbalg abgedichtet sind.

Es ist Aufgabe der vorliegenden Erfindung, eine aseptische Doppelsitz-Ventilvorrichtung zu schaffen, welche einen einfachen Aufbau aufweist, gut reinigbar und/oder sterilisierbar ist und ein Eindringen von Keimen weitgehend verhindert. Diese Aufgabe wird durch den Gegenstand mit den Merkmalen des Anspruchs 1 gelöst. Weitere Vorteile der Erfindung ergeben sich aus den Unteransprüchen.

Die Aufgabe wird insbesondere gelöst durch eine Doppelsitz-Ventilvorrichtung mit einem Gehäuse, das einen ersten und einen zweiten Kanalbereich für je ein Medium sowie einen zwischen den Kanalbereichen angeordneten, zu den Kanalbereichen offenen Leckageraum mit einem ersten Ventilsitz und einem zweiten Ventilsitz aufweist, einem ersten Ventilteller, der mit dem ersten Ventilsitz zusammenarbeitet, so dass der Leckageraum zu dem ersten Kanalbereich verschließbar ist, einem zweiten Ventilteller, der mit dem zweiten Ventilsitz zusammenarbeitet, so dass der Leckageraum zu dem zweiten Kanalbereich verschließbar ist, einem zumindest teilweise in dem zweiten Kanalbereich angeordneten rohrförmigen Element und einem Antrieb zum gemeinsamen oder getrennten Bewegen der Ventilteller. Erfindungsgemäß ist der zweite Ventilteller an einem ersten Ende des rohrförmigen Elements angeordnet, das rohrförmige Element an einem zweiten Ende beweglich in dem Gehäuse gelagert und mit einer ernsten Membran, insbesondere einer Faltenbalgmembran, ummantelt. Weiter weist erfindungsgemäß der Antrieb einen Anschlag auf, durch welchen ein Ventilteller in einer geschlossenen Position gehalten ist, während der andere Ventilteller geöffnet wird, so dass ein Anlüften druckschlagsicher möglich ist.

Das erste Ventil weist einen als Außenschaft ausgebildeten Ventilschaft und das zweite Ventil einen als Innenschaft ausgebildeten zweiten Ventilschaft, der zumindest teilweise in dem Außenschaft koaxial zu diesem angeordnet ist, auf. Eine derartige Anordnung erlaubt eine Bewegung der Ventilteller über den gemeinsamen Antrieb, insbesondere über einen in Axialrichtung der Ventilschäfte ober- oder unterhalb der Ventilteller angeordneten Antrieb.

Der Antrieb weist einen Zylinder und zwei den Zylinder in eine erste Druckkammer, eine zweite Druckkammer und eine dritte Druckkammer unterteilende Arbeitskolben auf, wobei Mittel vorhanden sind, so dass bei Druckbeaufschlagung der ersten Druckkammer beide Ventilteller gemeinsam bewegbar sind, bei Druckbeaufschlagung der zweiten Druckkammer der mit dem Außenschaft verbundene erste Ventilteller so bewegbar ist, dass der Leckageraum zu dem ersten Kanalbereich hin geöffnet wird, und bei Druckbeaufschlagung der dritten Druckkammer der mit dem Innenschaft verbundene zweite Ventilteller so bewegbar ist, dass der Leckageraum zum zweiten Kanalbereich hin geöffnet wird.

Der zweite Arbeitskolben ist mit dem Außenschaft durch Mittel gekoppelt, so dass bei Druckbeaufschlagung der zweiten Druckkammer die Bewegung des zweiten Arbeitskolbens auf den ersten Ventilteller derart übertragbar ist, dass der zweite Ventilteller öffnet, wobei der zweite Arbeitskolben mit dem Innenschaft über Mittel zusammenwirkt, so dass der zweite Ventilteller in einer Schließstellung gehalten ist. Die Mittel ermöglichen eine Kopplung durch Kraft- und/oder Formschluss für eine Bewegungsübertragung und/oder ein Halten bzw. Verriegeln der Ventilteller in einer Schließstellung. Zum Halten in einer Schließstellung sind in einer Ausführungsform Federelemente vorgesehen.

Der erste Arbeitskolben ist mit dem Innenschaft durch Mittel gekoppelt, so dass bei Druckbeaufschlagung der dritten Druckkammer die Bewegung des ersten Arbeitskolbens auf den zweiten Ventilteller derart übertragbar ist, dass der zweite Ventilteller öffnet, wobei der erste Arbeitskolben mit dem Außenschaft über Mittel zusammenwirkt, so dass der erste Ventilteller in einer Schließstellung gehalten ist.

Durch den der Verriegelung dienenden Anschlag ist ein sicheres, leckagefreies Anlüften der Ventilteller und getrenntes Reinigen der Kanalbereiche möglich.

Durch die Ummantelung des rohrförmigen Elements wird verhindert, dass Verunreinigungen, wie Luft oder Keime, über ein Lager des rohrförmigen Elements an dem Gehäuse in das Innere des zweiten Kanalbereichs eindringen können. Die flüssigkeitsundurchlässige Membran trennt somit sicher die Umgebung von dem zweiten Kanalbereich, so dass ein in dem zweiten Kanalbereich geführtes Medium oder Produkt aseptisch gehalten werden kann. Die Membran ist in einer Ausführungsform aus einem Kunststoff. In einer anderen Ausführungsform ist die Membran aus dünnwandigem Edelstahl.

In Weiterbildung der Doppelsitz-Ventilvorrichtung ist die erste Membran an dem zweiten Ventilteller sowie im Bereich eines gehäuseseitigen Lagers des rohrförmigen Elements befestigt. Die längenveränderliche Membran erstreckt sich somit über die gesamte, im zweiten Kanalbereich befindliche Länge des rohrförmigen Elements, unabhängig von einer Stellung des zweiten Ventiltellers. Dadurch ist in jeder Ventilstellung ein Eintreten von Verunreinigungen über das Lager in den zweiten Kanalbereich verhindert.

In Weiterbildung der Doppelsitz-Ventilvorrichtung ist der Außenschaft zumindest teilweise in dem ersten Kanalbereich angeordnet, wobei ein in dem ersten Kanalbereich angeordneter Bereich des Außenschafts mit einer Membran, insbesondere einer Faltenbalgmembran, ummantelt ist. Dadurch wird verhindert, dass über eine Lagerung des Außenschafts an dem Gehäuse Verunreinigungen in den zweiten Kanalbereich eindringen.

In Weiterbildung der Doppelsitz-Ventilvorrichtung sind einander zugewandete Konturen der Ventilteller komplementär ausgebildet. Die Ventilteller sind somit auf Anschlag aufeinander aufsetzbar. Die Konturen weisen in einer Ausführungsform komplementäre Nasen und Ausnehmungen auf. Durch ein Aufsetzen der Ventilteller auf Anschlag ist es möglich, einen durch die Ventile eingeschlossenen Raum im Bereich der Ventilteller radial abzudichten. Dadurch kann, wenn die Ventilteller auf Anschlag gebracht sind, ein Reinigungsmittel auch bei geöffneter Ventilstellung im Inneren der Ventile geführt werden.

In Weiterbildung der Doppelsitz-Ventilvorrichtung ist ein mit dem Leckageraum kommunizierter Verbindungskanal vorgesehen, welcher von den Kanalbereichen sicher getrennt ist. Durch den Verbindungskanal ist es möglich, ein Reinigungs- und/oder Sterilisationsmittel in den Leckageraum einzubringen und dieses über das rohrförmige Element abzulassen, so dass der Leckageraum gespült wird.

In Weiterbildung der Doppelsitz-Ventilvorrichtung ist der Verbindungskanal zwischen dem Außenschaft und dem Innenschaft ausgebildet. Dadurch ist es möglich, ein Reinigungs- und/oder Sterilisationsmittel über einen entsprechenden Zufluss an dem Außenschaft in den Leckageraum einzubringen. Der Zufluss ist in einer Ausführungsform durch eine Nut an dem Außenschaft gebildet. Ein Reinigungs- und/oder Sterilisationsmittel ist dabei auch bei geöffneter Ventilstellung in einen durch die Ventile eingeschlossenen Raum für eine Reinigung im Einsatz einbringbar.

In einer anderen Weiterbildung der Doppelsitz-Ventilvorrichtung ist der Verbindungskanal als Bohrung in dem Innenschaft ausgebildet. Bei einer üblichen Anordnung der Ventilvorrichtung, in welcher die Ventilschäfte und das rohrförmige Element im Wesentlichen vertikal angeordnet sind und der zweite Kanalbereich in Axialrichtung unterhalb des ersten Kanalbereichs verläuft, ist so eine Reinigung oder Sterilisation von unten möglich.

In Weiterbildung der Doppelsitz-Ventilvorrichtung ist der zweite Ventilteller einteilig an dem ersten Ende des rohrförmigen Elements angeformt. Dadurch ist eine einfache und sichere Anordnung des Ventiltellers an dem Ende des rohrförmigen Elements, ohne Nahtstellen oder andere Verbindungselemente, in welchen sich Schmutzpartikel absetzen können, möglich.

In Weiterbildung der Doppelsitz-Ventilvorrichtung ist das rohrförmige Element an dem zweiten Ende mit dem Innenschaft fest verbunden, so dass das rohrförmige Element den Innenschaft zumindest teilweise umgibt. Der Innenschaft ist dabei zumindest teilweise in dem rohrförmigen Element und koaxial zu diesem angeordnet. Der an dem ersten Ende des rohrförmigen Elements angeordnete Ventilteller ist dabei über das rohrförmige Element mit dem Ventilschaft für eine Bewegungsübertragung wirkverbunden.

In Weiterbildung der Doppelsitz-Ventilvorrichtung weist der Innenschaft einen Strömungsverteiler im Bereich des zweiten Ventiltellers auf. Der Strömungsverteiler lenkt die Strömung eines durch das Innere der Ventile geleiteten Reinigungs- und/oder Sterilisationsmittels um. Dadurch können die eingeschlossenen Räume gut durchspült werden.

In Weiterbildung der Doppelsitz-Ventilvorrichtung ist der zweite Ventilteller an einem Ende des Innenschafts angeordnet. Dadurch ist eine gute Bewegungsführung des Ventiltellers durch den Innenschaft möglich. Der Innenschaft endet dabei in einer Ausführungsform an dem zweiten Ventilteller.

In Weiterbildung der Doppeisitz-Ventilvorrichtung weist der Ventilteller Ausnehmungen auf. Durch die Ausnehmungen steht der Leckageraum, welcher durch die Ventilteller begrenzt ist, sowie der durch die auf Anschlag gebrachten Ventilteller, eingeschlossene Raum in Fluidverbindung mit dem Inneren des rohrförmigen Elements.

In Weiterbildung der Doppelsitz-Ventilvorrichtung ist der Innenschaft über eine Steckverbindung mit dem zweiten Ventilteller verbunden. Dadurch ist eine einfache Montage und Demontage des Innenschafts und des zweiten Ventiltellers möglich.

In Weiterbildung der Doppelsitz-Ventilvorrichtung ist die Steckverbindung durch Federelement gesichert. Das Federelement belastet die Steckverbindung dabei in einer Ausführungsform in axialer Richtung entgegen der Löserichtung der Steckverbindung. Durch Überwinden der Federkraft ist eine einfache, teilweise werkzeuglose Demontage möglich.

In Weiterbildung der Doppelsitz-Ventilvorrichtung ist der zweite Arbeitskolben einteilig mit dem Außenschaft ausgebildet. Der Arbeitskolben ist dabei in einer Ausführungsform mit dem Außenschaft hergestellt und einteilig an diesem angeformt. In einer anderen Ausführungsform sind die Bauteile getrennt hergestellt. Dabei sind für beide Bauteile unterschiedliche Materialien verwendbar. Die beiden Bauteile sind fest miteinander verbindbar, so dass in Gebrauch der Außenschaft einteilig mit dem zweiten Arbeitskolben ist.

In Weiterbildung der Doppelsitz-Ventilvorrichtung weist der Antrieb Mittel auf, durch die eine Bewegung zum Anlüften des ersten Ventiltellers und/oder des zweiten Ventiltellers begrenzt ist. Als Mittel sind in einer Ausführungsform Anschläge vorgesehen. Auch bei hohen auftretenden Kräften ist dabei sicher verhindert, dass ein Ventilteller zu weit geöffnet wird.

In Weiterbildung der Doppelsitz-Ventilvorrichtung sind die Ventilsitze an einer gemeinsamen, glatten Zylinderwand ausgebildet. Beide Ventile sind als Radialventile ausgelegt. Die glatte Zylinderwand ist gut spülbar. Insbesondere durch ein Vermeiden von Nuten oder Einkerbungen ist dabei eine Schmutzablagerung verhinderbar.

In Weiterbildung der Doppelsitz-Ventilvorrichtung weisen die Ventilteller Dichtringe auf, welche in Radialnuten an den Ventiltellern eingesetzt sind. Dichtringe, insbesondere O-Ringe, sind dabei als Massenware kostengünstig erhältlich. Die Dichtringe sind bei Verschleiß schnell und einfach austauschbar. Dadurch ist ein sicheres Abdichten über eine lange Lebensdauer der Ventilvorrichtung möglich.

In Weiterbildung der Doppelsitz-Ventilvorrichtung sind die Dichtringe mit einem sich zur Mitte der Dichtringe verjüngenden Querschnitt ausgebildet. Derartige Dichtringe sind einfach in Radialnuten einsetzbar und werden auch bei einer Scherbelastung aufgrund einer Axialbewegung sicher in den Radialnuten gehalten.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden dabei einheitliche Bezugszeichen verwendet. Sämtliche aus den Ansprüchen, der Beschreibung oder den Zeichnungen hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Zeichnungen zeigen:
- Fig. 1:: eine aseptische Doppelsitz-Ventilvorrichtung gemäß einem Ausführungsbeispiel bei geschlossener Ventilstellung;
- Fig. 2:: die Doppelsitz-Ventilvorrichtung gemäß Fig. 1 bei offener Ventilstellung;
- Fig. 3:: die Ventilvorrichtung gemäß Fig. 1 bei einer Ventilstellung zur Reinigung eines ersten Kanalbereichs;
- Fig. 4:: die Ventilvorrichtung gemäß Fig. 1 bei einer Ventilstellung zur Reinigung des zweiten Kanalbereichs;
- Fig. 5:: eine Doppelsitz-Ventilvorrichtung gemäß einem zweiten Ausführungsbeispiel der Erfindung bei geschlossener Ventilstellung;
- Fig. 6:: die Ventilvorrichtung gemäß Fig. 5 bei offener Ventilstellung;
- Fig. 7:: eine aseptische Doppelsitz-Ventilvorrichtung gemäß einem dritten Ausführungsbeispiel der Erfindung bei geschlossener Ventilstellung;
- Fig. 8:: Module für eine Doppelsitz-Ventilvorrichtung gemäß Fig. 7 in einem auseinandergebauten Zustand;
- Fig. 9:: die Doppelsitz-Ventilvorrichtung gemäß Fig. 7 bei geöffneter Ventilstellung;
- Fig. 10:: die Doppelsitz-Ventilvorrichtung gemäß Fig. 7 bei einer Ventilstellung zum Reinigen eines ersten Kanalbereichs; und
- Fig. 11:: die Doppelsitz-Ventilvorrichtung gemäß Fig. 7 bei einer Ventilstellung zum Reinigen eines zweiten Kanalbereichs.

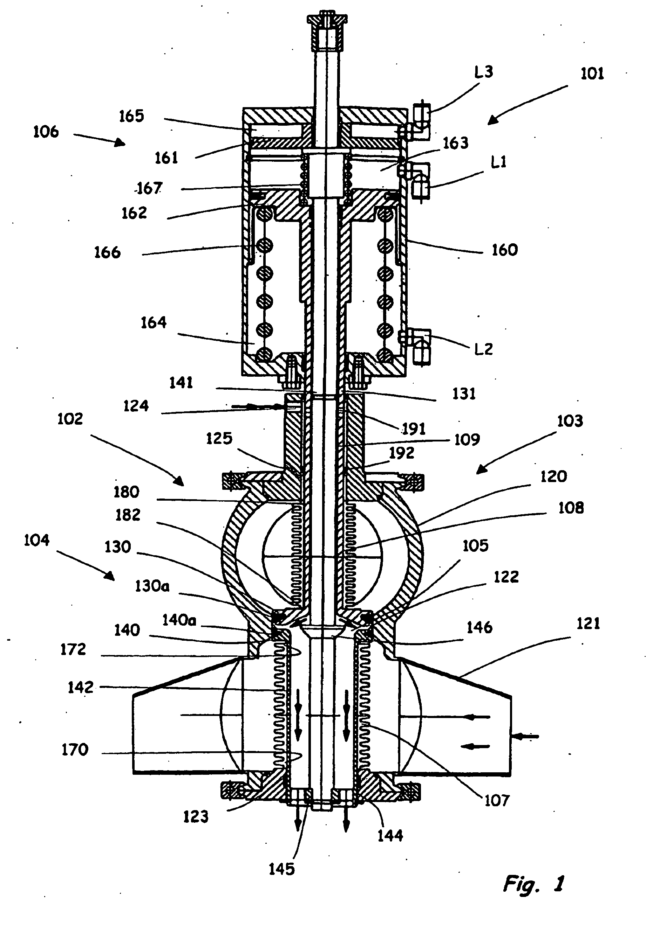

Fig. 1 bis 4 zeigen eine aseptische Doppelsitz-Ventilvorrichtung 101 gemäß einem Ausführungsbeispiel der Erfindung. Die Doppelsitz-Ventilvorrichtung 101 weist ein Gehäuse 102 auf, welches mit einem ersten Kanalbereich 120 und einem zweiten Kanalbereich 121 zum Anschluss von zwei nicht dargestellten Rohrleitungen ausgebildet ist. Zwischen den Kanalbereichen 120, 121 ist das Gehäuse 102 mit einer zylindrischen Innenwand 122 ausgeformt, welche als Ventilsitze für Ventilteller 130, 140 dient.

Die Doppelsitz-Ventilvorrichtung 101 umfasst ein erstes, dem ersten Kanalbereich 120 zugeordnetes Ventil 103 mit dem Ventilteller 130 und einem Außenschaft 131. Der Ventilteller 130 weist eine Radialnut auf, in welcher ein Dichtring 130a eingesetzt ist. Der Bereich des Außenschafts 131, welcher im Inneren des Kanalbereichs 120 angeordnet ist, ist durch einen Balg 108 ummantelt. Der Balg 108 ist mit einem ersten Ende 180 fest mit dem Gehäuse 102 verbunden und mit einem zweiten Ende 182 fest mit dem Ventilteller 130 verbunden. An dem Gehäuse 120 ist eine Entlüftungsbohrung 125 für den Balg 108 angebracht.

Die Doppelsitz-Ventilvorrichtung 101 umfasst weiter ein zweites, dem zweiten Kanalbereich 121 zugeordnetes Ventil 104 mit dem zweiten Ventilteller 140, einem als Innenschaft ausgebildeten Ventilschaft 141, welcher zumindest teilweise innerhalb des Außenschafts 131 koaxial zu diesem angeordnet ist, sowie einem rohrförmigen Element 142, an dessen Außenumfang an einem ersten Ende der Ventilteller 140 einteilig angeformt ist. An dem Ventilteller 140 ist ein Dichtring 140a eingesetzt. An einem dem Ventilteller 140 gegenüberliegenden Ende weist das rohrförmige Element einen Boden 145 auf. Der Innenschaft 141 erstreckt sich durch den zweiten Kanalbereich 121 und ist an dem Boden 145 des rohrförmigen Elements 142 mit diesem verbunden. Das rohrförmige Element 142 ist in Axialrichtung verschieblich an dem Gehäuse 102 in einem Lager 123 gelagert. Die in Fig. 1 bis 4 dargestellte Doppelsitz-Ventilvorrichtung 101 öffnet in der dargestellten üblichen Anordnung nach unten. Durch ein Öffnen des Ventils kommt ein Teil eines Mantels 144 des rohrförmigen Elements 142 in Kontakt mit der Umgebung. Durch einen Balg 107 ist sichergestellt, dass aufgrund der Bewegung des rohrförmigen Elements 142 in die Umgebung keine Keime oder andere Verunreinigungen in das Innere des Kanalbereichs 121, und damit in Kontakt mit einem durch die zugehörige Rohrleitung geleiteten Produkt, gebracht wird. Der Balg 107 ist an einem Ende 170 im Bereich des Lagers 123 fest mit dem Gehäuse 102 und an dem gegenüberliegenden Ende 172 fest mit dem Ventilteller 140 verbunden.

Wie in Fig. 1 dargestellt, ist bei geschlossener Ventilstellung durch die Innenwand 122 des Gehäuses 102 und die Ventilteller 130, 140 ein Leckageraum 105 zu den Kanalbereichen 120, 121 begrenzt. In das Gehäuse 102 ist eine Öffnung 124 eingebracht, durch welche ein Reinigungs- und/oder Sterilisationsmittel über eine Nut 191 an dem Außenschaft 131 in einen zwischen dem Außenschaft 131 und dem Innenschaft 141 ausgebildeten Verbindungskanal 109 einbringbar ist. Das Reinigungs- und/oder Sterilisations-mittel dringt über den Verbindungskanal 109 in den Leckageraum 105 ein und läuft aus dem Leckageraum 105 über das rohrförmige Element 142 ab. Der Innenschaft 141 weist ein Verteilerelement 146 auf, welches im Bereich des Ventiltellers 140 angebracht ist. Das Verteilerelement 146 ermöglich eine gute Verteilung des Reinigungs- und/oder Sterilisationsmittels in dem Leckageraum 105, wobei insbesondere auch die einander zugewandten Oberflächen der Ventilteller 130, 140 gereinigt werden. Die Entlüftungsbohrung 125 für den Balg 108 ist von dem zugeführten Reinigungsmittel durch einen Dichtring 192 getrennt.

Die Ventilteller 130, 140 sind durch einen Antrieb 106 gemeinsam in eine geöffnete Ventilstellung bewegbar oder jeder für sich anlüftbar. Der dargestellte Antrieb 106 umfasst zu diesem Zweck einen Zylinder 160, welcher durch einen ersten Arbeitskolben 161 und einen zweiten Arbeitskolben 162 in eine erste Druckkammer 163, eine zweite Druckkammer 164 und eine dritte Druckkammer 165 unterteilt ist. Die erste Druckkammer 163 liegt dabei zwischen der dritten und der zweiten Druckkammer 164, 165. Die Druckkammern 161, 163, 164 weisen Druckluftanschlüsse L1, L2 und L3 auf. Der Arbeitskolben 162 und der zweite Arbeitskolben 161 werden in der dargestellten Ausführungsform durch eine erste Feder 167, welche in der ersten Druckkammer 163 angeordnet ist, und eine zweite Feder 166, welche in der zweiten Druckkammer 164 angeordnet ist, vorbelastet, so dass die Ventilteller 130, 140, wie in Fig. 1 dargestellt, unter Einschließen eines Leckageraums 105 an der die Ventilsitze bildenden Innenwand 22 abdichtend anliegen.

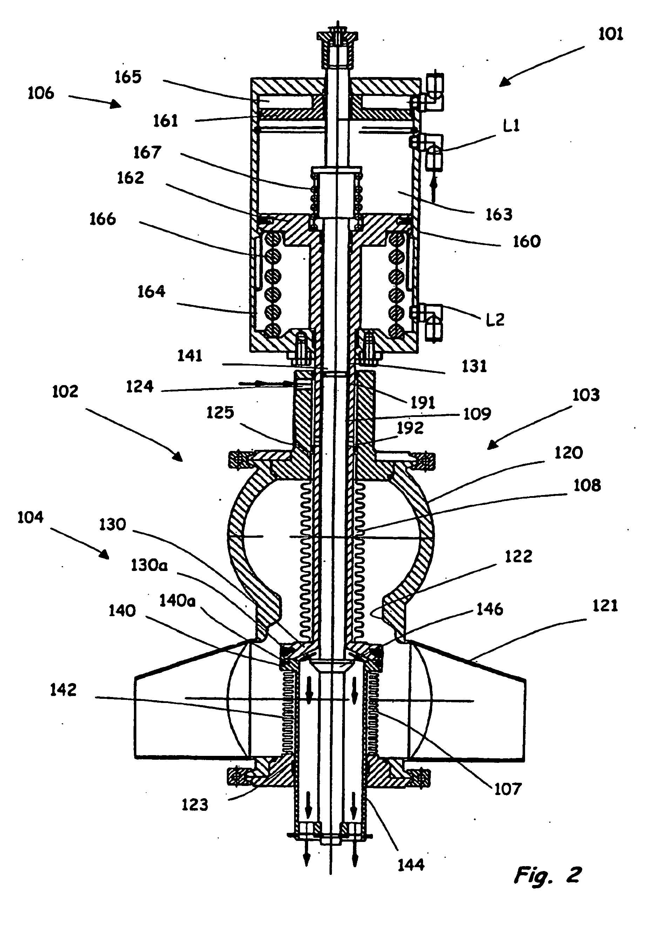

Fig. 2 zeigt das Ventil 101 gemäß Fig. 1 in einer geöffneten Stellung. Der zweite Arbeitskolben 162 ist einteilig mit dem Außenschaft 131 ausgeformt. Durch Aufbringen von Druckluft an dem Druckluftanschluss L1 werden somit der Arbeitskolben 162 und der Ventilschaft 131 entgegen der Kraft der in der zweiten Druckkammer 164 angeordneten Feder 166 verschoben. Die Bewegung erfolgt in der dargestellten, üblichen Ausrichtung der Ventilvorrichtung 101 nach unten. Durch die Kraft wird der Arbeitskolben 162 in der Darstellung nach unten verschoben, so dass der erste Ventilteller 130 in Richtung des zweiten Ventiltellers 140 bewegt wird und auf Anschlag mit diesem gebracht wird. Einander gegenüberliegenden Oberflächen der Ventilteller 130, 140 sind dabei komplementär ausgeformt, so dass ein durch die Ventile 103, 104 eingeschlossener Raum radial abgedichtet wird. Durch weiteres Aufbringen von Druckluft an dem Druckluftanschluss L1 wird das Ventil 101 geöffnet.

Durch Anliegen der Ventilteller 130, 140 auf Anschlag und ein radiales Abdichten des eingeschlossenen Raums ist, wie in Fig. 2 schematisch dargestellt, eine Reinigung und/oder Sterilisation des eingeschlossenen Raums auch bei einer geöffneten Ventilstellung möglich. Das Reinigungs- und/oder Sterilisationsmittel dringt dabei über die Öffnung 124 und die Nut 192 in den Verbindungskanal 109 und über den Verbindungskanal 109 in den von den Ventilen eingeschlossenen Raum ein. Das Reinigungs- und/oder Sterilisationsmittel läuft anschließend über das rohrförmige Element 142 ab. Der Strömungsverteiler 146 ermöglicht dabei eine gute Verteilung des Reinigungs- und/oder Sterilisationsmittels.

Der zweite Ventilteller 140 wird durch die Bewegung des ersten Ventiltellers 130 mitbewegt. Der mit dem Ventilteller 140 verbundene Innenschaft 141 wird dabei ebenfalls bewegt. Gleichzeitig wird der Innenschaft 141 entgegen seiner Bewegungsrichtung durch die Feder 167 belastet, so dass eine Trennung der Ventilteller 130, 140 verhindert wird.

Durch die Öffnung der Ventilvorrichtung 101 wird der Balg 107 verkürzt und der Balg 108 gelängt. Dabei wird insbesondere durch den Balg 108 verhindert, dass eventuell an dem Außenschaft 141 haftende Verunreinigungen in das Innere des Kanalbereichs gelangen können. Das rohrförmige Element 142 tritt beim Öffnen der Ventilvorrichtung zumindest teilweise aus dem Gehäuse 102 aus. Dabei kommt ein Mantel 144 des rohrförmigen Elements 142 in Kontakt mit der Umgebung. Durch den Balg 107 wird verhindert, dass beim Schließen des Ventils, wobei die entsprechenden Bereiche des Mantels 144 wieder in das Gehäuse 102 und in das Innere des Kanalbereichs 121 bewegt werden, Keime in Kontakt mit einem in dem Kanalbereich 121 befindlichen Produkt gelangen können.

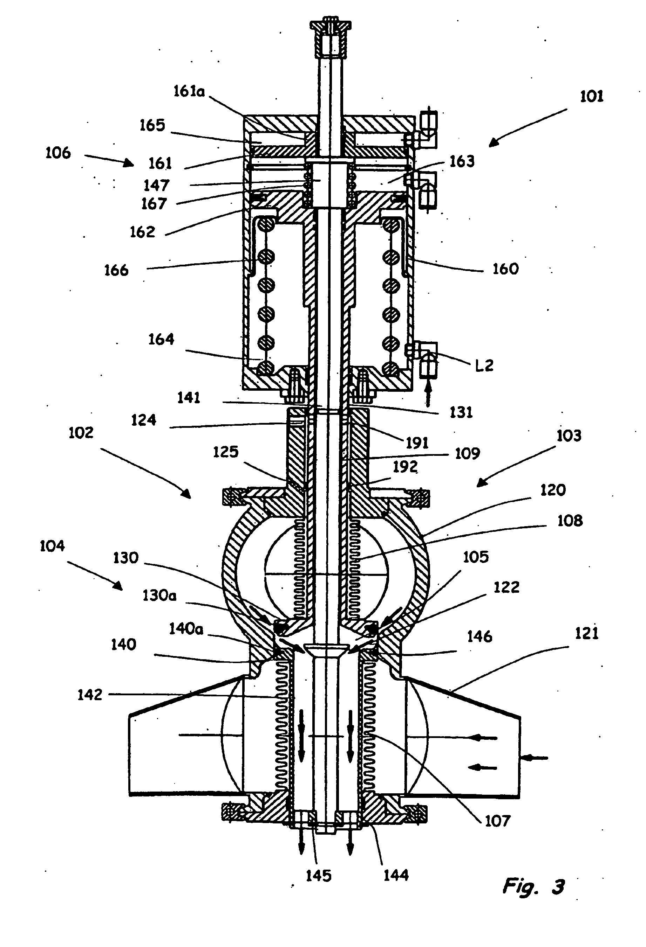

Fig. 3 zeigt die aseptische Doppelsitz-Ventilvorrichtung 101 gemäß Fig. 1 in einer ersten Reinigungsstellung, wobei der erste Ventilteller 130 angelüftet ist. Zum Anlüften des Ventiltellers 130 wird Druckluft über den Druckluftanschluss L2 der zweiten Druckkammer 164 zugeführt. Aufgrund der zugeführten Druckluft wird der zweite Arbeitskolben 162 in der dargestellten, üblichen Anordnung der Ventilvorrichtung 101 nach oben bewegt. Der erste Arbeitskolben 162 ist einteilig mit dem Außenschaft 131 des ersten Ventils 103 ausgeformt, so dass die Bewegung des Arbeitskolbens 131 auf den Außenschaft 131 und damit auf den Ventilteller 130 übertragen wird. Die Bewegung des Arbeitskolbens 162 zum Anlüften des Ventiltellers 130, d. h. nach oben in der dargestellten Anordnung, ist durch geeignete Mittel begrenzt. In dem dar-gestellten Ausführungsbeispiel ist die Bewegung durch die minimale Größe der ersten Druckkammer 163 und der dritten Druckkammer 165 begrenzt. Die minimale Größe der dritten Druckkammer 165 ist dabei in der dargestellten Ausführungsform durch die Form des ersten Arbeitskolbens 161 mit einem Zapfen 161a bestimmt. Der durch alle drei Druckkammern 163, 164, 165 ragende Innenschaft 141 weist einen Bereich 147 mit einem vergrößerten Durchmesser auf, welcher in der ersten Arbeitskammer 163 angeordnet ist. Der Bereich 147 bildet für den ersten Arbeitskolben 162 sowie den zweiten Arbeitskolben 161 Anschläge, so dass die minimale Größe der ersten Druckkammer 163 durch die Länge des Bereichs 147 in axialer Richtung bestimmt ist.

Durch das in Fig. 3 dargestellte Anlüften des ersten Ventiltellers 130 ist die nicht dargestellte erste Rohrleitung und der dazugehörige erste Kanalbereich 120 reinigbar oder sterilisierbar. Das Reinigungs- und/oder Sterilisationsmittel wird hierfür über den Kanalbereich 120 und den angelüfteten Ventilteller 130 dem Leckageraum 105 zugeführt. Das zugeführte Reinigungs- und/oder Sterilisationsmittel läuft aus dem Leckageraum 105 über das rohrförmige Element 142 ab. Durch das Reinigungsmittel kann dabei eine Druckkraft auf den zweiten Ventilteller 140 wirken. In dem dargestellten Ausführungsbeispiel wird bei einem Anlüften des ersten Ventiltellers 130 eine Kraft von dem ersten Arbeitskolben 162 an den verbreiterten Bereich 147 des Innenschafts 141 übertragen. Diese Kraft steht einer eventuell durch das Reinigungs- und/oder Sterilisationsmittel auf den Ventilteller 140 aufgebrachten Kraft entgegen. Die dargestellte aseptische Doppelsitz-Ventilvorrichtung 101 ist somit in der in Fig. 3 dargestellten ersten Reinigungsstellung druckschlagsicher.

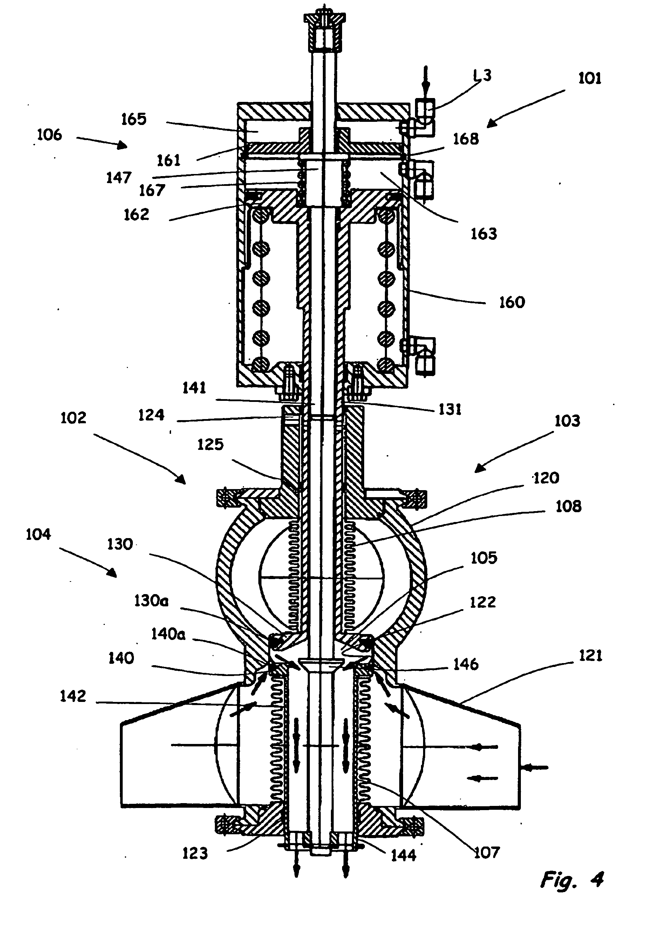

Fig. 4 zeigt die Doppelsitz-Ventilvorrichtung 101 gemäß Fig. 1 in einer zweiten Reinigungsstellung, wobei der zweite Ventilteller 140 angelüftet ist. Ein Anlüften des zweiten Ventiltellers 130 erfolgt durch eine Druckbeaufschlagung des zweiten Arbeitskolbens 161 durch Einbringen von Druckluft über den Druckluftanschluss L3 in die dritte Druckluftkammer 165. Aufgrund der Druckluft wird der erste Arbeitskolben 161 und der mit diesem über den Bereich 147 mit verbreitertem Durchmesser zur übertragung der Bewegung gekoppelte zweite Ventilschaft 141 in der dargestellten, üblichen Anordnung nach unten bewegt, so dass der Ventilteller 140 angelüftet wird. An der Innenwand des Zylinders 160 ist in der dargestellten Ausführungsform ein ringförmiges Element 168 angebracht. Durch das ringförmige Element 168 ist eine Bewegung des Arbeitskolbens 161 und somit eine Bewegung des Ventiltellers 140 zum Anlüften begrenzt.

Die auf den zweiten Arbeitskolben 161 aufgebrachte Kraft wird über den Bereich 147 mit vergrößertem Durchmesser des Innenschafts 141 auf den ersten Arbeitskolben 162 übertragen. Die derart auf den ersten Arbeitskolben 162 aufgebrachte Kraft steht einer eventuell durch das Reinigungsmittel an den ersten Ventilteller 130 wirkenden Kraft entgegen. Die dargestellte aseptische Doppelsitz-Ventilvorrichtung ist somit auch in der zweiten, in Fig. 4 dargestellten, Reinigungsstellung druckschlagsicher.

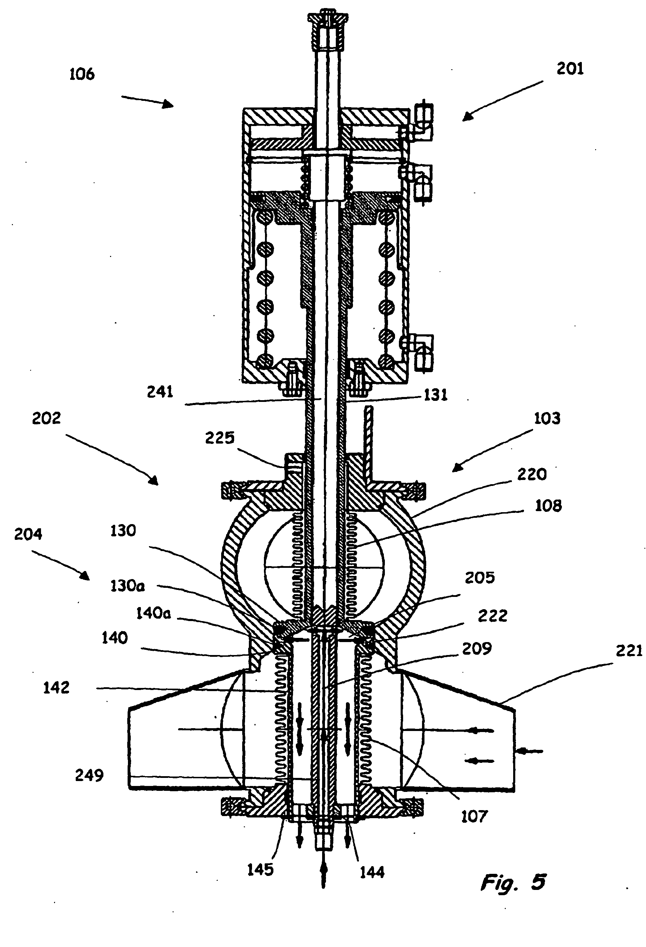

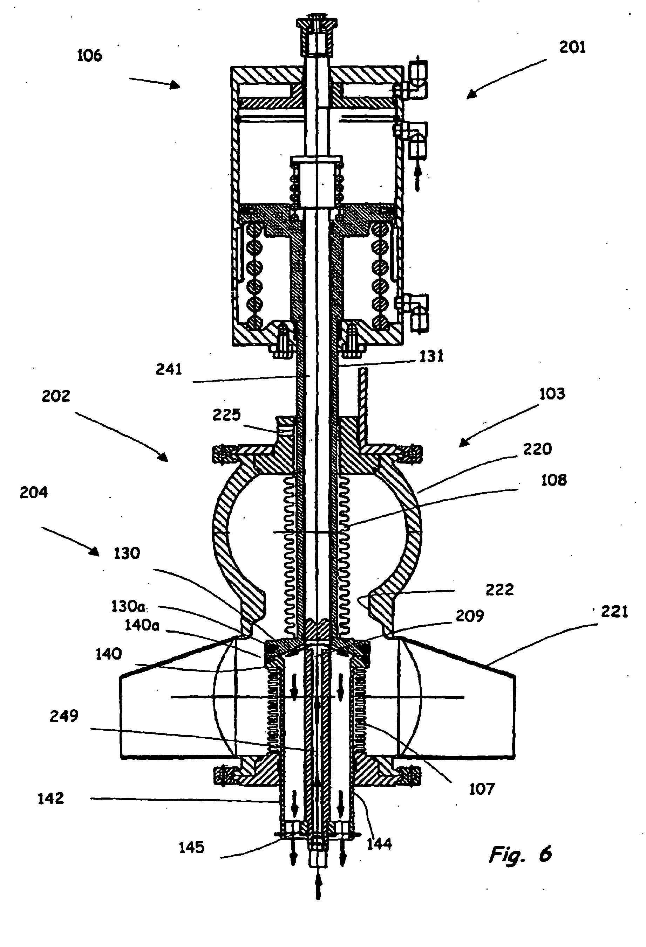

Fig. 5 und 6 zeigen Schnittansichten einer aseptischen Doppelsitz-Ventilvorrichtung 201 gemäß einem zweiten Ausführungsbeispiel der Erfindung. Die Doppelsitz-Ventilvorrichtung 201 umfasst ein Gehäuse 202 mit einem ersten Kanalbereich 220, einem zweiten Kanalbereich 221 und einer einen Leckageraum 205 seitlich begrenzenden Innenwand 222. Die Doppelsitz-Ventilvorrichtung 201 umfasst ein erstes Ventil 103, ein zweites Ventil 204 und einen Antrieb 106. Die Bauteile der Doppelsitz-Ventilvorrichtung 201 entsprechen größtenteils den Bauteilen der Doppelsitz-Ventilvorrichtung 101 gemäß den Fig. 1 bis 4, so dass auf eine Beschreibung verzichtet wird.

Das zweite Ventil 204 umfasst den zweiten Ventilteller 140 und das rohrförmige Element 142. Es weist weiter einen als Innenschaft ausgebildeten Ventilschaft 241 auf, welcher zumindest teilweise innerhalb des Außenschafts 131 koaxial zu diesem angeordnet ist. Der Innenschaft 241 erstreckt sich durch den zweiten Kanalbereich 221 und ist an einem dem Ventilteller 140 gegenüberliegenden zweiten Ende des rohrförmigen Elements 142 über einen Boden 145 mit diesem verbunden. Der Innenschaft 241 weist eine Bohrung 209 im Bereich des zweiten Kanalbereichs 221 auf, welche an dem zweiten Ventilteller 40, d. h. bei geschlossener Ventilstellung in dem Leckageraum 205, mündet. Durch die Bohrung 209 ist ein Reinigungs- und/oder Sterilisationsmittel in den Leckageraum 205 von einem in Fig. 5 und 6 unteren Ende einbringbar, so dass dieser bei der in Fig. 5 dargestellten geschlossenen Ventilstellung spülbar ist. Das in Fig. 5 und 6 unten angeordnete Ende der Ventilvorrichtung 201 befindet sich auch im Gebrauch der Ventilvorrichtung 201 üblicherweise unten, so dass bei diesem Reinigungs- und/oder Sterilisationsprozess auch von einer Reinigung von unten gesprochen werden kann. Die Bohrung 209 wirkt als Verbindungskanal für das Reinigungs- und/oder Sterilisationsmittel, wobei der Verbindungskanal mit dem Leckageraum kommuniziert, jedoch von den Kanalbereichen 220, 221 sicher getrennt ist.

Durch Bälge 107, 108 wird verhindert, dass Keime über die Lagerungen des Außenschafts 131 und/oder des rohrförmigen Elements 142 eintreten können. Für den Balg 108 ist eine Entlüftungsbohrung 225 an dem Gehäuse 202 vorgesehen.

Die Ventilteller 130, 140 sind durch den oben beschriebenen Antrieb 106 gemeinsam in eine geöffnete Ventilstellung bewegbar oder jeder für sich anlüftbar. Die Reinigung des Leckageraums 105 bzw. des zwischen den Ventilen 103, 104 liegenden Raums ist dabei sowohl bei geschlossener Ventilstellung (siehe Fig. 5) als auch bei geöffneter Ventilstellung (siehe Fig. 6) möglich.

Das Gehäuse 202 entspricht im Wesentlichen dem Gehäuse 102. Jedoch ist keine Öffnung für die Zufuhr von Reinigungsmitteln notwendig.

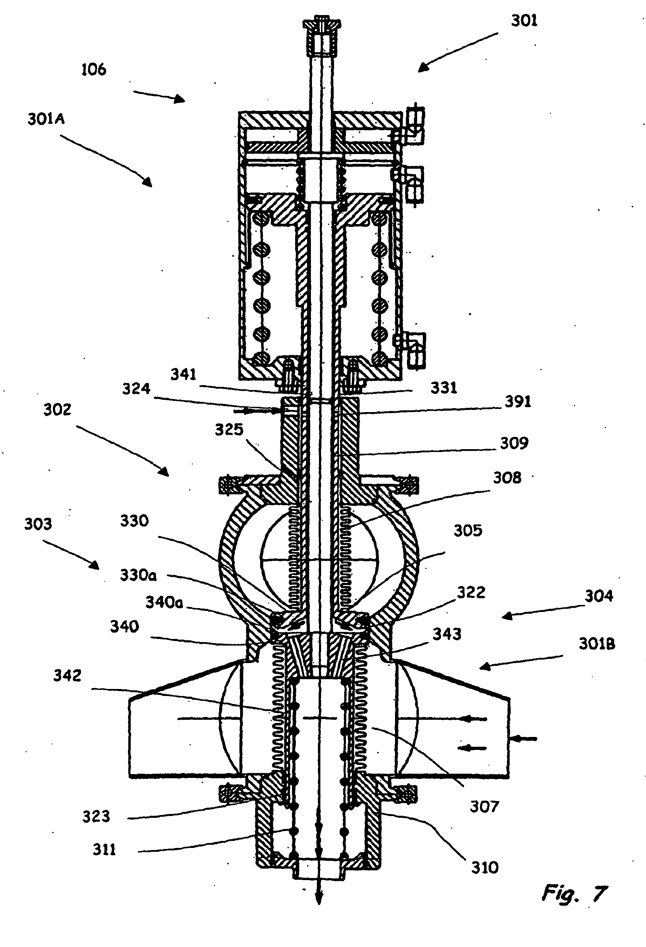

Fig. 7 und 9 bis 11 zeigen Schnittansichten einer aseptischen Doppelsitz-Ventilvorrichtung 301 gemäß einem dritten Ausführungsbeispiel der Erfindung, umfassend ein Gehäuse 302, ein erstes Ventil 303, ein zweites Ventil 304 und den Antrieb 106. Der Antrieb 106 entspricht dabei dem Antrieb des zweiten und dritten Ausführungsbeispiels, so dass auf eine ausführliche Beschreibung verzichtet wird. Das erste Ventil 303 und ein Ventilschaft 341 des zweiten Ventils 304 sind mit dem Antrieb 106 als ein Modul 301A vormontierbar. Das zweite Ventil 304 weist weiter einen Ventilteller 340 und ein rohrförmiges Element 342 auf, welche mit einem Balg 307, einem Gehäuseteil 310 und einer Feder 311 als ein Modul 301 B vormontierbar sind.

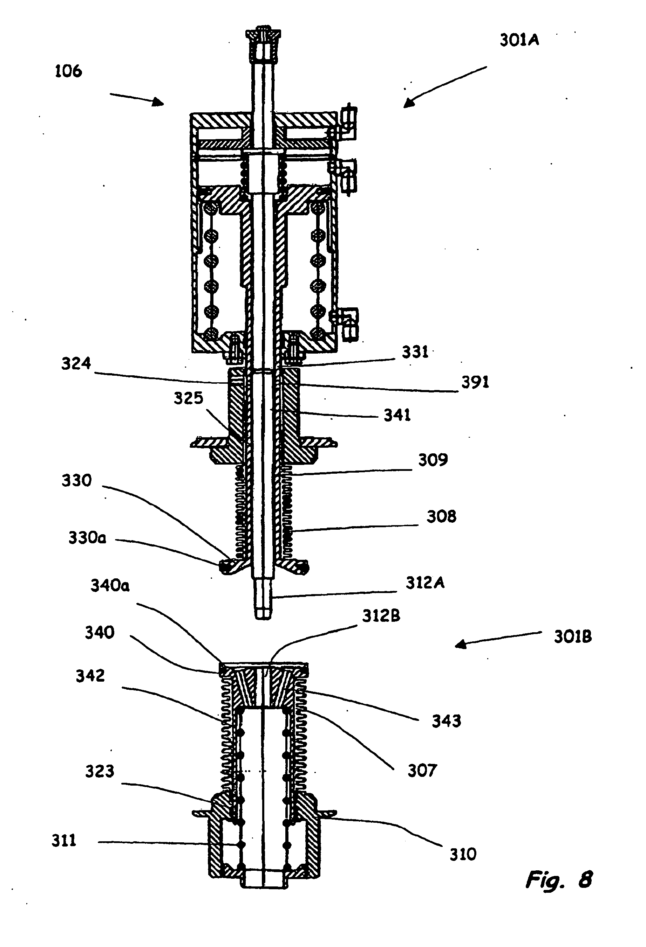

Die Module 301A und 301 B sind in Fig. 8 in einem demontierten Zustand dargestellt.

Der Ventilschaft 341 ist mit dem zweiten Ventilteller 340 für eine Bewegungsübertragung koppelbar. Das Koppeln erfolgt in dem dargestellten Ausführungsbeispiel durch eine Steckverbindung 312A, 312B. Für eine Sicherung der axialen Verbindung wird der Ventilteller 340 durch die Feder 311 derart beaufschlagt, dass die Kraft der Feder 311 einem Anlüften des Ventiltellers 340 entgegensteht.

Wie in Fig. 7 erkennbar, ist zwischen einem Außenschaft 331 des ersten Ventils und dem Innenschaft 341 des zweiten Ventils ein Verbindungskanal 309 ausgebildet, in welchen über eine Öffnung 325 an dem Gehäuse 302 und eine Nut 391 an dem Außenschaft 331 ein Reinigungs- und/oder Sterilisationsmittel einführbar ist. Das Reinigungs- und/oder Sterilisationsmittel fließt über den Verbindungskanal 309 in den Leckageraum 305 und über Ausnehmungen 343 an dem zweiten Ventilteller 340 in das rohrförmige Element 342 und somit ab. Dadurch ist eine gute Reinigung des Leckageraumes 305, welcher zwischen dem ersten Kanalbereich 320 und dem zweiten Kanalbereich 321 angeordnet ist, bei geschlossener Ventilstellung, wie in Fig. 7 dargestellt, möglich. Der Leckageraum 305 ist über die Ventilteller 330, 340 mit den Dichtringen 330a, 340a zu den Kanalbereichen 320, 321 abgedichtet.

Das rohrförmige Element 342 ist in dem Gehäuseteil 310 in einem Lager 323 axial beweglich gelagert. Durch einen Balg 307 wird verhindert, dass Keime über das Lager 323 in das Innere des Kanalbereichs 321 gelangen. An dem Außenschaft 331 ist ein Balg 308 angebracht, für welchen im Gehäuse 302 eine Entlüftungsbohrung 325 vorgesehen ist.

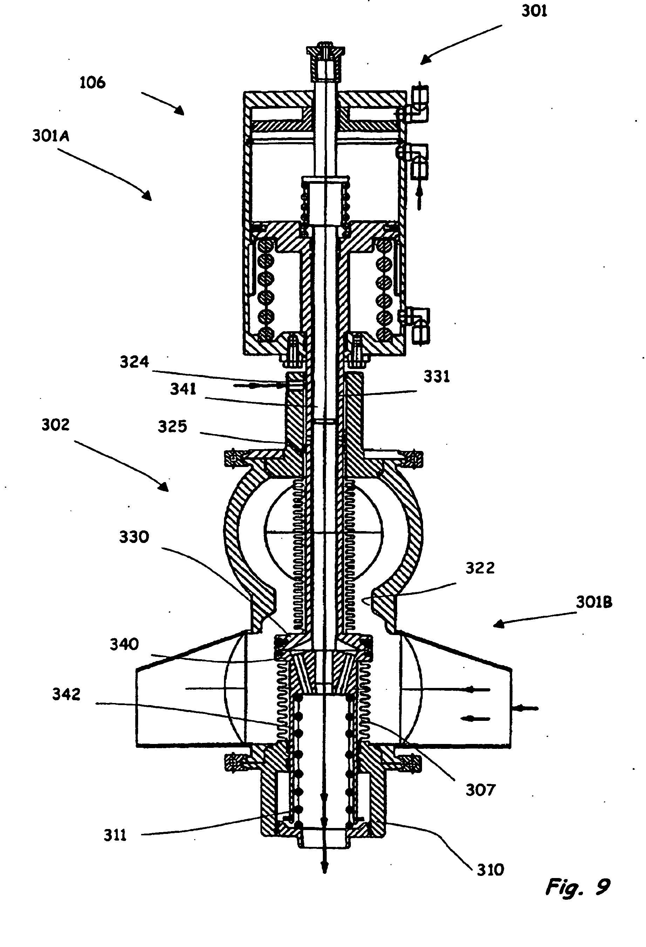

Durch den Antrieb 106 ist das Ventil auf die bereits beschriebene Weise öffenbar. Wie in Fig. 9 dargestellt, ist auch bei geöffneter Ventilstellung eine Reinigung des zwischen dem Ventil 303 und dem Ventil 304 eingeschlossenen Raums möglich. Der eingeschlossene Raum ist über die Ventilteller 330, 340 mit den Dichtringen 330a, 340a zu den Kanalbereichen 320, 321 abgedichtet. Aufgrund der Ventilöffnung wird die Feder 311 komprimiert, sie wirkt somit einer Trennung der Ventilteller 330, 340 entgegen. Das Reinigungsmittel wird dabei, wie bereits beschrieben, durch die Öffnung 324 zugeführt und läuft über das rohrförmige Element 342 ab.

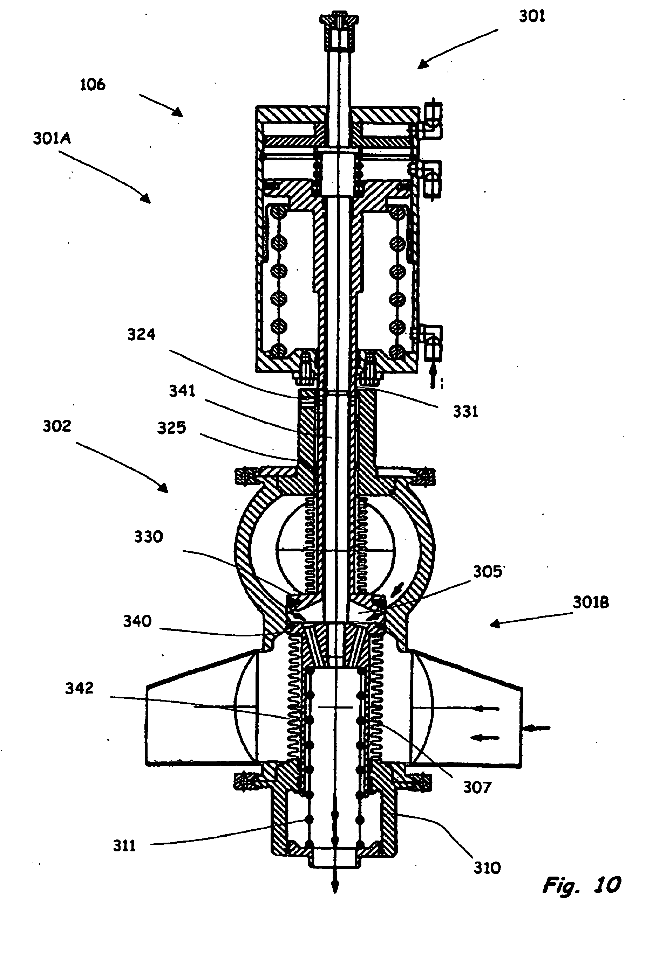

Fig. 10 zeigt ein Anlüften des ersten Ventiltellers 330 durch Einbringen von Druckluft über den Duckluftanschluss L2. Das Reinigungs- und/oder Sterilisationsmittel fließt dabei über den angelüfteten Ventilteller 330 in den Leckageraum 305 und über die Ausnehmungen 343 in das Innere des rohrförmigen Elements 342 ab. Die axiale Steckverbindung 312A ist dabei ausreichend lang dimensioniert, so dass aufgrund der Bewegung beim Anlüften die Steckverbindung nicht gelöst wird.

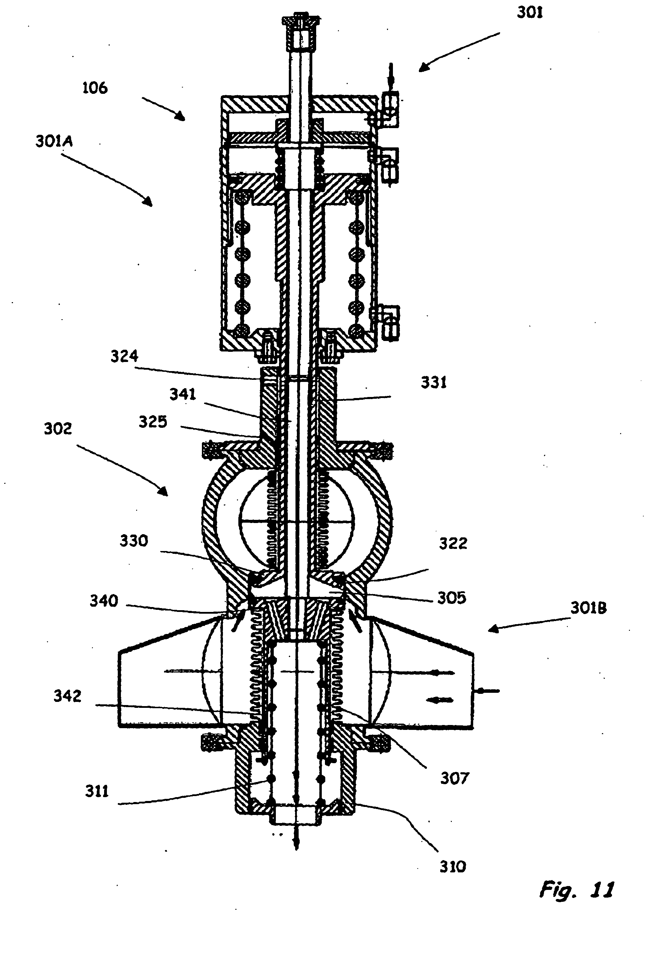

Fig. 11 zeigt die aseptische Doppelsitz-Ventilvorrichtung 301 bei einem Anlüften des zweiten Ventiltellers 340. Wie durch Pfeile in Fig. 11 schematisch dargestellt, fließt bei einem Anlüften des Ventiltellers 340 ein Reinigungs- und/oder Sterilisationsmittel über den angelüfteten Ventilteller 340 in den Leckageraum 305 ein. Der Leckageraum 305 wird dadurch gespült und das Reinigungs- und/oder Sterilisationsmittel kann über die Ausnehmung 343 in das Innere des rohrförmigen Bereichs 342 und damit abfließen. Ein Anlüften des Ventiltellers 340 erfolgt über den Antrieb 106 durch Aufbringen von Druckluft an dem Druckluftanschluss L3, wie oben beschrieben. Durch die Bewegung des einteilig an dem Ventilteller 30 angeformten radialen Elements 342 wird die Feder 311 komprimiert. Die Kraft der Feder 311 steht somit einem Anlüften entgegen und verhindert eine Trennung an der axialen Steckverbindung 312A, 312B.

## Patentansprüche

1. Doppelsitz-Ventilvorrichtung, insbesondere für die Pharma-, Lebensmittel- und Getränkeindustrie, mit
- einem Gehäuse (102, 202, 302), das einen ersten und einen zweiten Kanalbereich (120, 220, 320, 121, 221, 321) für je ein Medium sowie einen zwischen den Kanalbereichen (120, 220, 320, 121, 221, 321) angeordneten, zu den Kanalbereichen (120, 220, 320, 21, 121, 221, 321) offenen Leckageraum (105, 205, 305) mit einem ersten Ventilsitz und einem zweiten Ventilsitz aufweist,
- einem ersten Ventil (103, 303) und einem zweiten Ventil (104, 204, 304), wobei das erste Ventil (103, 303) einen als Außenschaft (131, 331) ausgebildeten Ventilschaft aufweist und das zweite Ventil (104, 204, 304) einen als Innenschaft (141, 241, 341) ausgebildeten zweiten Ventilschaft aufweist, der zumindest teilweise in dem Außenschaft (131, 331) koaxial zu diesem angeordnet ist,
- einem ersten Ventilteller (130, 230, 330), der mit dem ersten Ventilsitz zusammenarbeitet, so dass der Leckageraum (105, 205, 305) zu dem ersten Kanalbereich (120, 220, 320) verschließbar ist,
- einem zweiten Ventilteller (140, 240, 340), der mit dem zweiten Ventilsitz zusammenarbeitet, so dass der Leckageraum (105, 205, 305) zu dem zweiten Kanalbereich (121, 221, 321) verschließbar ist,
- einem zumindest teilweise in dem zweiten Kanalbereich (121, 221, 321) angeordneten rohrförmigen Element (142, 242, 342), wobei der zweite Ventilteller (140, 240, 340) an einem ersten Ende des rohrförmigen Elements (142, 342) angeordnet ist und das rohrförmige Element (142, 342) an einem zweiten Ende beweglich in dem Gehäuse gelagert ist, und
- einem Antrieb (106) zum gemeinsamen oder getrennten Bewegen der Ventilteller (130, 330, 140, 340), wobei der Antrieb (106) einen Anschlag aufweist, durch welche ein Ventilteller in einer geschlossenen Position gehalten ist, während der andere Ventilteller geöffnet wird,
**dadurch gekennzeichnet, dass**
- das rohrförmige Element (142, 342) mit einer ersten Membran, insbesondere einer Faltenbalgmembran (107, 307), ummantelt ist,
- der Antrieb (106) einen Zylinder (160) und zwei den Zylinder (160) in eine erste Druckkammer (163), eine zweite Druckkammer (164) und eine dritte Druckkammer (165) unterteilende Arbeitskolben (161, 162) aufweist, wobei der Innenschaft (141, 241, 341) durch alle drei Druckkammern (163, 164, 165) ragt und relativ zu dem ersten Arbeitskolben (161) und zu dem zweiten Arbeitskolben (162) in Axialrichtung beweglich angeordnet ist, und Mittel vorhanden sind, sodass
o bei Druckbeaufschlagung der ersten Druckkammer (163) beide Ventilteller gemeinsam in eine geöffnete Ventilstellung bewegbar sind,
o bei Druckbeaufschlagung der zweiten Druckkammer (164) der mit dem Außenschaft verbundene erste Ventilteller so bewegbar ist, dass der Leckageraum zu dem ersten Kanalbereich hin geöffnet wird, und
o bei Druckbeaufschlagung der dritten Druckkammer (165) der mit dem Innenschaft verbundene zweite Ventilteller so bewegbar ist, dass der Leckageraum zum zweiten Kanalbereich hin geöffnet wird,
- der Innenschaft (141, 241, 341) einen Bereich (147) mit einem vergrößerten Durchmesser aufweist, welcher in der ersten Druckkammer (163) angeordnet ist und für den ersten Arbeitskolben (161) sowie für den zweiten Arbeitskolben (162) Anschläge bildet,
- der zweite Arbeitskolben (162) mit dem Außenschaft (131) durch Mittel gekoppelt ist, so dass bei Druckbeaufschlagung der zweiten Druckkammer (164) die Bewegung des zweiten Arbeitskolbens (162) auf den ersten Ventilteller (130) derart übertragbar ist, dass der erste Ventilteller (130) öffnet, wobei der zweite Arbeitskolben (162) mit dem Innenschaft (141) über den Bereich (147) mit einem vergrößerten Durchmesser zusammenwirkt, so dass der zweite Ventilteller (140) in einer Schließstellung gehalten ist, und
- der erste Arbeitskolben (161) mit dem Innenschaft (141) durch den Bereich (147) mit einem vergrößerten Durchmesser gekoppelt ist, so dass bei Druckbeaufschlagung der dritten Druckkammer (165) die Bewegung des ersten Arbeitskolbens (161) auf den zweiten Ventilteller (140) derart übertragbar ist, dass der zweite Ventilteller (140) öffnet, wobei der erste Arbeitskolben (161) mit dem Außenschaft (131) über den Bereich (147) mit einem vergrößerten Durchmesser zusammenwirkt, so dass der erste Ventilteller (130) in einer Schließstellung gehalten ist.

2. Doppelsitz-Ventilvorrichtung nach Anspruch 1, **dadurch gekennzeichnet, dass** die erste Membran an dem zweiten Ventilteller (140, 340) und im Bereich eines gehäuseseitigen Lagers (123, 323) des rohrförmigen Elements (142, 342) befestigt ist.

3. Doppelsitz-Ventilvorrichtung nach Anspruch 1 oder 2, **dadurch gekennzeichnet, dass** der Außenschaft (131, 331) zumindest teilweise in dem ersten Kanalbereich (120, 220, 320) angeordnet ist, wobei ein in dem ersten Kanalbereich (120, 220, 320) angeordneter Bereich des Außenschafts (131, 331) mit einer Membran, insbesondere einer Faltenbalgmembran (108, 308), ummantelt ist.

4. Doppelsitz-Ventilvorrichtung nach einem der Ansprüche 1 bis 3, **dadurch gekennzeichnet, dass** einander zugewandeten Konturen der Ventilteller (130, 330, 40, 140, 340) komplementär ausgebildet sind.

5. Doppelsitz-Ventilvorrichtung nach einem der Ansprüche 1 bis 4, **dadurch gekennzeichnet, dass** ein mit dem Leckageraum (105, 205, 305) kommunizierter Verbindungskanal (109, 209, 309) vorgesehen ist, welcher von den Kanalbereichen (120, 220, 320, 121, 221, 321) getrennt ist.

6. Doppelsitz-Ventilvorrichtung nach Anspruch 5, **dadurch gekennzeichnet, dass** der Verbindungskanal (109, 309) zwischen dem Außenschaft (130, 330) und dem Innenschaft (140, 340) ausgebildet ist.

7. Doppelsitz-Ventilvorrichtung nach Anspruch 6, **dadurch gekennzeichnet, dass** der Verbindungskanal als Bohrung (209) in dem Innenschaft (241) ausgebildet ist.

8. Doppelsitz-Ventilvorrichtung nach einem der vorangegangenen Ansprüche, **dadurch gekennzeichnet, dass** der zweite Ventilteller (140, 340) einteilig an dem ersten Ende des rohrförmigen Elements (142, 342) angeformt ist.

9. Doppelsitz-Ventilvorrichtung nach einem der vorangegangenen Ansprüche, **dadurch gekennzeichnet, dass** das rohrförmige Element (142) an dem zweiten Ende mit dem Innenschaft (141, 241) fest verbunden ist, so dass das rohrförmige Element (142) den Innenschaft (141, 241) zumindest teilweise umgibt.

10. Doppelsitz-Ventilvorrichtung nach Anspruch 9, **dadurch gekennzeichnet, dass** der Innenschaft (141) einen Strömungsverteiler (146) im Bereich des zweiten Ventiltellers (140) aufweist.

11. Doppelsitz-Ventilvorrichtung nach einem der Ansprüche 1 bis 8, **dadurch gekennzeichnet, dass** der zweite Ventilteller (340) an einem Ende des Innenschafts (341) angeordnet ist.

12. Doppelsitz-Ventilvorrichtung nach Anspruch 11, **dadurch gekennzeichnet, dass** der Ventilteller Ausnehmungen (343) aufweist.

13. Doppelsitz-Ventilvorrichtung nach Anspruch 11 oder 12, **dadurch gekennzeichnet, dass** der Innenschaft (341) über eine Steckverbindung (312A, 312B) mit dem zweiten Ventilteller (340) verbunden ist.

14. Doppelsitz-Ventilvorrichtung nach Anspruch 13, **dadurch gekennzeichnet, dass** die Steckverbindung (312A, 312B) durch ein Federelement (311) gesichert ist.

15. Doppelsitz-Ventilvorrichtung nach einem der vorangegangenen Ansprüche, **dadurch gekennzeichnet, dass** der zweite Arbeitskolben (162) einteilig mit dem Außenschaft (131, 331) ausgebildet ist.

16. Doppelsitz-Ventilvorrichtung nach einem der vorangegangenen Ansprüche **dadurch gekennzeichnet, dass** der Antrieb (160) Mittel (168, 133, 147) aufweist, durch die eine Bewegung zum Anlüften des ersten Ventiltellers und/oder des zweiten Ventiltellers begrenzt ist.

17. Doppelsitz-Ventilvorrichtung nach einem der vorangegangenen Ansprüche, **dadurch gekennzeichnet, dass** die Ventilsitze an einer gemeinsamen, glatten Zylinderwand (122) ausgebildet sind.

18. Doppelsitz-Ventilvorrichtung nach einem der vorangegangenen Ansprüche, **dadurch gekennzeichnet, dass** die Ventilteller (130, 330, 140, 340) Dichtringe (130a, 330a, 40a, 140a, 340a) aufweisen, welche in Radialnuten an den Ventiltellern (130, 330, 140, 340) eingesetzt sind.

19. Doppelsitz-Ventilvorrichtung nach Anspruch 18, **dadurch gekennzeichnet, dass** die Dichtringe (130a, 330a, 140a, 340a) mit einem sich zur Mitte der Dichtringe (130a, 330a, 140a, 340a) verjüngenden Querschnitt ausgebildet sind.

## Claims

1. Double-seat valve device, in particular for the pharmaceutical, food and beverage industries, having
- a housing (102, 202, 302) which has a first and a second channel region (120, 220, 320, 121, 221, 321), for a respective medium and a leakage space (105, 205, 305) which is arranged between the channel regions (120, 220, 320, 121, 221, 321), is open in relation to the channel regions (120, 220, 320, 21, 121, 221, 321) and has a first valve seat and a second valve seat,
- a first valve (103, 303) and a second valve (104, 204, 304), wherein the first valve (103, 303) has a valve stem which is in the form of an outer stem (131, 331) and the second valve (104, 204, 304) has a second valve stem which is in the form of an inner stem (141, 241, 341) and is arranged, at least in parts, in the outer stem (131, 331), coaxially in relation thereto,
- a first valve disc (130, 230, 330) which interacts with the first valve seat so that the leakage space (105, 205, 305) can be closed in relation to the first channel region (120, 220, 320),
- a second valve disc (140, 240, 340) which interacts with the second valve seat so that the leakage space (105, 205, 305) can be closed in relation to the second channel region (121, 221, 321),
- a tubular element (142, 242, 342) which is arranged, at least in part, in the second channel region (121, 221, 321), wherein the second valve disc (140, 240, 340) is arranged at a first end of the tubular element (142, 342) and the tubular element (142, 342) has its second end mounted in a movable manner in the housing, and
- a drive (106) for moving the valve discs (130, 330, 140, 340) jointly or separately, wherein the drive (106) has a stop by means of which one valve disc is retained in a closed position, while the other valve disc is being opened,
**characterized in that**
- the tubular element (142, 342) is encased by a first membrane, in particular a folding-bellows membrane (107, 307),
- the drive (106) has a cylinder (160) and two working pistons (161, 162) which subdivide the cylinder (160) into a first pressure chamber (163), a second pressure chamber (164) and a third pressure chamber (165), wherein the inner stem (141, 241, 341) traverses all the three pressure chambers (163, 164, 165) and is arranged movable relative to the first working piston (161) and to the second working piston (162) in the axial direction, and means are provided so that
• in the event of the first pressure chamber (163) being subjected to pressure, the two valve discs can be moved jointly to an opened valve position,
• in the event of the second pressure chamber (164) being subjected to pressure, the first valve disc which is connected to the outer stem, can be moved such that the leakage space is opened towards the first channel region, and
• in the event of the third pressure chamber (165) being subjected to pressure, the second valve disc which is connected to the inner stem, can be moved such that the leakage space is opened towards the second channel region,
- the inner stem (141, 241, 341) has a region (147) with an enlarged diameter disposed in the first pressure chamber (163) und forming stops for the first working piston (161) and for the second working piston (162),
- the second working piston (162) is coupled to an outer stem (131) by means so that, in the event of the second pressure chamber (164) being subjected to pressure, the movement of the second working piston (162) can be transmitted to the first valve disc (130) such that the first valve disc (130) opens, the second working piston (162) interacting with the inner stem (141) via the region (147) with an enlarged diameter so that the second valve disc (140) is retained in a closing position, and
- the first working piston (161) is coupled to the inner stem (141) by the region (147) with an enlarged diameter so that, in the event of the third pressure chamber (165) being subjected to pressure, the movement of the first working piston (161) can be transmitted to the second valve disc (140) such that the second valve disc (140) opens, the first working piston (161) interacting with the outer stem (131) via the region (147) with an enlarged diameter so that the first valve disc (130) is retained in a closing position.

2. Double-seat valve device according to Claim 1, **characterized in that** the first membrane is fastened on the second valve disc (140, 340) and in the region of a housing-mounted bearing (123, 323) of the tubular element (142, 342).

3. Double-seat valve device according to Claim 1 or 2, **characterized in that** the outer stem (131, 331) is arranged at least in part in the first channel region (120, 220, 320), wherein a region of the outer stem (131, 331) which is arranged in the first channel region (120, 220, 320) is encased by a membrane, in particular a folding-bellows membrane (108, 308).

4. Double-seat valve device according to any of Claims 1 to 3, **characterized in that** mutually facing contours of the valve discs (130, 330, 40, 140, 340) are designed to complement one another.

5. Double-seat valve device according to any of Claims 1 to 4, **characterized by** the provision of a connecting channel (109, 209, 309) which communicates with the leakage space (105, 205, 305) and is separated from the channel regions (120, 220, 320, 121, 221, 321).

6. Double-seat valve device according to Claim 5, **characterized in that** the connecting channel (109, 309) is formed between the outer stem (130, 330) and the inner stem (140, 340).

7. Double-seat valve device according to Claim 6, **characterized in that** the connecting channel is designed in the form of a bore (209) in the inner stem (241).

8. Double-seat valve device according to any of the preceding claims, **characterized in that** the second valve disc (140, 340) is integrally formed at the first end of the tubular element (142, 342).

9. Double-seat valve device according to any of the preceding claims, **characterized in that** the tubular element (142) has its second end fixed to the inner stem (141, 241) so that the tubular element (142) encloses the inner stem (141, 241) at least in part.

10. Double-seat valve device according to Claim 9, **characterized in that** the inner stem (141) has a flow distributor (146) in the region of the second valve disc (140).

11. Double-seat valve device according to any of Claims 1 to 8, **characterized in that** the second valve disc (340) is arranged at one end of the inner stem (341).

12. Double-seat valve device according to Claim 11, **characterized in that** the valve disc has apertures (343).

13. Double-seat valve device according to Claim 11 or 12, **characterized in that** the inner stem (341) is connected to the second valve disc (340) via a plug-in connection (312A, 312B).

14. Double-seat valve device according to Claim 13, **characterized in that** the plug-in connection (312A, 312B) is secured by a spring element (311).

15. Double-seat valve device according to any of the preceding claims, **characterized in that** the second working piston (162) is formed integrally with the outer stem (131, 331).

16. Double-seat valve device according to any of the preceding claims, **characterized in that** the drive (160) has means (168, 133, 147) which limit a movement for admitting air to the first valve disc and/or the second valve disc.

17. Double-seat valve device according to any of the preceding claims, **characterized in that** the valve seats are formed on a common, smooth cylinder wall (122).

18. Double-seat valve device according to any of the preceding claims, **characterized in that** the valve discs (130, 330, 140, 340) have sealing rings (130a, 330a, 40a, 140a, 340a) which are inserted into radial grooves in the valve discs (130, 330, 140, 340).

19. Double-seat valve device according to Claim 18, **characterized in that** the sealing rings (130a, 330a, 140a, 340a) are formed with a cross section which tapers towards the centre of the sealing rings (130a, 330a, 140a, 340a).

## Revendications

1. Dispositif de soupape à deux sièges, notamment pour l'industrie pharmaceutique, alimentaire et des boissons, comprenant :
- un boîtier (102, 202, 302) qui présente une première et une deuxième région de canal (120, 220, 320, 121, 221, 321) pour un médium respectif ainsi qu'un espace de fuite (105, 205, 305) disposé entre les régions de canal (120, 220, 320, 121, 221, 321) et ouvert vers les régions de canal (120, 220, 320, 21, 121, 221, 321), comprenant un premier siège de soupape et un deuxième siège de soupape,
- un premier soupape (103, 303) et un deuxième soupape (104, 204, 304), la première soupape (103, 303) présentant une tige de soupape réalisée sous forme de tige extérieure (131, 331) et la deuxième soupape (104, 204, 304) présentant une deuxième tige de soupape réalisée sous forme de tige intérieure (141, 241, 341), qui est disposée au moins en partie dans la tige extérieure (131, 331) coaxialement à celle-ci,
- un premier plateau de soupape (130, 230, 330) qui coopère avec le premier siège de soupape de sorte que l'espace de fuite (105, 205, 305) puisse être fermé par rapport à la première région de canal (120, 220, 320),
- un deuxième plateau de soupape (140, 240, 340) qui coopère avec le deuxième siège de soupape, de sorte que l'espace de fuite (105, 205, 305) puisse être fermé par rapport à la deuxième région de canal (121, 221, 321),
- un élément de forme tubulaire (142, 242, 342) disposé au moins en partie dans la deuxième région de canal (121, 221, 321), le deuxième plateau de soupape (140, 240, 340) étant disposé à une première extrémité de l'élément de forme tubulaire (142, 342) et l'élément de forme tubulaire (142, 342) étant monté dans le boîtier de manière déplaçable à une deuxième extrémité, et
- un entraînement (106), pour le déplacement conjoint ou séparé des plateaux de soupape (130, 330, 140, 340), l'entraînement (106) présentant une butée qui permet de maintenir un plateau de soupape dans une position fermée, tandis que l'autre plateau de soupape est ouvert, **caractérisé en ce que**
- l'élément de forme tubulaire (142, 342) étant enveloppé d'une première membrane, notamment d'une membrane à soufflet (107, 307),
- l'entraînement (106) présente un cylindre (160) et deux pistons de travail (161, 162) divisant le cylindre (160) en une première chambre de pression (163), une deuxième chambre de pression (164) et une troisième chambre de pression (165), la tige intérieure (141, 241, 341) se dressant à travers tous les trois chambres de pression (163, 164, 165) et étant déplaçable par rapport au premier piston de travail (161) et au deuxième piston de travail (162) dans la direction axiale, et des moyens étant prévus de telle sorte que
• dans le cas d'une sollicitation de pression de la première chambre de pression (163), les deux plateaux de soupape peuvent être déplacés en commun vers une position ouverte de soupape,
• dans le cas d'une sollicitation de pression de la deuxième chambre de pression (164), le premier plateau de soupape connecté à la tige extérieure peut être déplacé de telle sorte que l'espace de fuite soit ouvert vers la première région de canal, et
• dans le cas d'une sollicitation de pression de la troisième chambre de pression (165), le deuxième plateau de soupape connecté à la tige intérieure peut être déplacé de telle sorte que l'espace de fuite soit ouvert vers la deuxième région de canal,
- la tige intérieure (141, 241, 341) présente une région (147) de diamètre élargi, qui est disposé dans la première chambre de pression (163) et forme des butées pour le premier piston de travail (161) ainsi que pour le deuxième piston de travail (162),
- le deuxième piston de travail (162) est accouplé à la tige extérieure (131) par des moyens de telle sorte que dans le cas d'une sollicitation de pression de la deuxième chambre de pression (164), le déplacement du deuxième piston de travail (162) puisse être transmis au premier plateau de soupape (130) de telle sorte que le premier plateau de soupape (130) s'ouvre, le deuxième piston de travail (162) coopérant avec la tige intérieure (141) par une région (147) de diamètre élargi de telle sorte que le deuxième plateau de soupape (140) soit maintenu dans une position de fermeture, et
- le premier piston de travail (161) est accouplé à la tige intérieure (141) par la région (147) de diamètre élargi de telle sorte que dans le cas d'une sollicitation de pression de la troisième chambre de pression (165), le déplacement du premier piston de travail (161) puisse être transmis au deuxième plateau de soupape (140) de telle sorte que le deuxième plateau de soupape (140) s'ouvre, le premier piston de travail (161) coopérant avec la tige extérieure (131) par la région (147) de diamètre élargi de telle sorte que le premier plateau de soupape (130) soit maintenu dans une position de fermeture.

2. Dispositif de soupape à deux sièges selon la revendication 1, **caractérisé en ce que** la première membrane est fixée sur le deuxième plateau de soupape (140, 340) et dans la région d'un palier côté boîtier (123, 323) de l'élément tubulaire (142, 342).

3. Dispositif de soupape à deux sièges selon la revendication 1 ou 2, **caractérisé en ce que** la tige extérieure (131, 331) est disposée au moins en partie dans la première région de canal (120, 220, 320), une région de la tige extérieure (131, 331) disposée dans la première région de canal (120, 220, 320) étant enveloppée par une membrane, notamment une membrane à soufflet (108, 308).

4. Dispositif de soupape à deux sièges selon l'une quelconque des revendications 1 à 3, **caractérisé en ce que** des contours tournés l'un vers l'autre des plateaux de soupape (130, 330, 40, 140, 340) sont réalisés sous forme complémentaire.

5. Dispositif de soupape à deux sièges selon l'une quelconque des revendications 1 à 4, **caractérisé en ce qu'**un canal de connexion (109, 209, 309) communiquant avec l'espace de fuite (105, 205, 305) est prévu, lequel est séparé des régions de canal (120, 220, 320, 121, 221, 321).

6. Dispositif de soupape à deux sièges selon la revendication 5, **caractérisé en ce que** le canal de connexion (109, 309) est réalisé entre la tige extérieure (130, 330) et la tige intérieure (140, 340).

7. Dispositif de soupape à deux sièges selon la revendication 6, **caractérisé en ce que** le canal de connexion est réalisé sous forme d'alésage (209) dans la tige intérieure (241).

8. Dispositif de soupape à deux sièges selon l'une quelconque des revendications précédentes, **caractérisé en ce que** le deuxième plateau de soupape (140, 340) est moulé d'une seule pièce sur la première extrémité de l'élément de forme tubulaire (142, 342).

9. Dispositif de soupape à deux sièges selon l'une quelconque des revendications précédentes, **caractérisé en ce que** l'élément de forme tubulaire (142) est connecté fixement à sa deuxième extrémité à la tige intérieure (141, 241), de sorte que l'élément de forme tubulaire (142) entoure au moins en partie la tige intérieure (141, 241).

10. Dispositif de soupape à deux sièges selon la revendication 9, **caractérisé en ce que** la tige intérieure (141) présente un distributeur d'écoulement (146) dans la région du deuxième plateau de soupape (140).

11. Dispositif de soupape à deux sièges selon l'une quelconque des revendications 1 à 8, **caractérisé en ce que** le deuxième plateau de soupape (340) est disposé à une extrémité de la tige intérieure (341).

12. Dispositif de soupape à deux sièges selon la revendication 11, **caractérisé en ce que** le plateau de soupape présente des évidements (343).

13. Dispositif de soupape à deux sièges selon la revendication 11 ou 12, **caractérisé en ce que** la tige intérieure (341) est connectée au deuxième plateau de soupape (340) par le biais d'une connexion par enfichage (312A, 312B).

14. Dispositif de soupape à deux sièges selon la revendication 13, **caractérisé en ce que** la connexion par enfichage (312A, 312B) est sécurisée par un élément de ressort (311).

15. Dispositif de soupape à deux sièges selon l'une quelconque des revendications précédentes, **caractérisé en ce que** le deuxième piston de travail (162) est réalisé d'une seule pièce avec la tige extérieure (131, 331).

16. Dispositif de soupape à deux sièges selon l'une quelconque des revendications précédentes, **caractérisé en ce que** l'entraînement (160) présente des moyens (168, 133, 147) par le biais desquels un déplacement de ventilation du premier plateau de soupape et/ou du deuxième plateau de soupape est limité.

17. Dispositif de soupape à deux sièges selon l'une quelconque des revendications précédentes, **caractérisé en ce que** les sièges de soupape sont réalisés sur une paroi de cylindre (122) commune et lisse.

18. Dispositif de soupape à deux sièges selon l'une quelconque des revendications précédentes, **caractérisé en ce que** les plateaux de soupape (130, 330, 140, 340) présentent des bagues d'étanchéité (130a, 330a, 40a, 140a, 340a) qui sont insérées dans des rainures radiales sur les plateaux de soupape (130, 330, 140, 340).

19. Dispositif de soupape à deux sièges selon la revendication 18, **caractérisé en ce que** les bagues d'étanchéité (130a, 330a, 140a, 340a) sont réalisées avec une section transversale se rétrécissant par rapport au centre des bagues d'étanchéité (130a, 330a, 140a, 340a).
